# FASCICULE DE BREVET EUROPEEN

(11) **EP 1 112 796 B1**
(45) Date de publication et mention de la délivrance du brevet: **04.05.2005**
(21) Numéro de dépôt: 00403633.1
(22) Date de dépôt: 21.12.2000
(51) Int. Cl.: B23C 3/30, B23C 5/16

(54) **Procédé et dispositif d'usinage en surface d'une structue telle qu'une structure alveolaire**
Verfahren und Vorrichtung zur Bearbeitung von Honigwabenstrukturen
Method and device for machining a cellular structure

(30) Priorité: 27.12.1999 FR 9916530
(43) Date de publication de la demande: 04.07.2001
(73) Titulaire: AIRBUS France, 31060 Toulouse (FR)
(72) Inventeur: De Mattia, Denis, 44115 Basse Goulaine (FR); Colin, Bernard-Albert, 44100 Nantes (FR)
(74) Mandataire: Poulin, Gérard

(56) Documents cités:
- EP-A- 0 064 573
- US-A- 3 264 128
- US-A- 4 677 886

## Description

### Domaine technique

L'invention concerne un procédé et un dispositif d'usinage en surface d'une structure, telle qu'une structure alvéolaire, présentant au moins une rangée d'évidements sensiblement alignés et régulièrement espacés, débouchant sur la surface à usiner.

Plus précisément, l'invention concerne un procédé et un dispositif conçus pour usiner une telle structure suivant une trajectoire strictement parallèle à une ou plusieurs des rangées d'évidements débouchant sur la surface, sur une profondeur quelconque inférieure à l'épaisseur de la structure, à partir de ladite surface.

Une application privilégiée de l'invention concerne l'usinage en surface d'une planche ou d'une plaque d'un matériau alvéolaire à cellules tubulaires tel qu'un matériau en nid d'abeilles, avant que des peaux ou des panneaux de fermeture ne soient placés sur les deux faces de la planche pour former un panneau sandwich susceptible d'être utilisé notamment dans l'industrie aéronautique.

### Etat de la technique

Dans un certain nombre d'industries telles que l'industrie aéronautique, des éléments de structure sont fréquemment réalisés sous la forme de panneaux sandwiches, plans ou non. De tels panneaux se caractérisent notamment par une grande rigidité et par une masse relativement faible.

Les panneaux sandwiches comprennent souvent une âme formée en un matériau alvéolaire à cellules tubulaires, de part et d'autre de laquelle sont rapportées deux peaux, généralement par collage.

Pour diverses raisons (réduction de la masse, augmentation de la durée de vie, amélioration des performances des structures réalisées avec ces matériaux, sécurité, etc.) il peut être intéressant d'interconnecter les différents évidements délimités par les alvéoles. Ainsi, lorsque le matériau alvéolaire à cellules tubulaires est intégré dans un panneau sandwich, il devient possible de drainer les liquides qui peuvent rentrer dans les évidements sous certaines conditions ou encore d'équilibrer la pression de l'air contenu dans les évidements si la pression externe est modifiée.

Pour réaliser ces interconnexions, il est connu de réaliser des encoches dans les parois séparant les évidements voisins, avant de recouvrir ces évidements de la peau qui viendra se placer sur la surface de la structure. Les documents GB-A-1 353 468, US-A-4 749 150 et US-A-5 543 198 montrent l'intérêt de telles encoches, qui peuvent être de formes et de dimensions variées. Toutefois, ils n'enseignent aucun moyen pour résoudre les problèmes de fabrication qui vont à présent être exposés.

De façon générale, les matériaux alvéolaires à cellules tubulaires présentent des évidements disposés en rangées juxtaposées selon un motif régulier. Dans le cas le plus fréquent, les matériaux sont dits en "nids d'abeilles" et les évidements présentent une section hexagonale. Les parois des évidements sont le plus souvent en aluminium ou en une matière composite, organique ou non.

Lorsqu'on désire faire communiquer les évidements d'un matériau alvéolaire en usinant des encoches à sa surface, on doit s'assurer que les encoches soient bien positionnées et présentent des formes et des dimensions maîtrisées pour éviter des effets négatifs sur les produits. Cela signifie notamment que chaque encoche ne doit faire communiquer que deux évidements adjacents et ne doit pas s'étendre jusqu'aux noeuds séparant plusieurs évidements.

Cependant, dans la pratique, les planches de matériaux alvéolaires à cellules tubulaires ne sont pas régulières et souffrent de défauts aléatoires liés à leur fabrication (empilage défectueux des feuilles, déformations lors de l'expansion, ondulations des évidements......).

Par ailleurs, tant que le matériau n'est pas tenu par l'ajout de peaux sur ses deux faces, il présente une faible rigidité propre et se déforme donc aisément lorsque des efforts sont appliqués à sa surface.

Compte tenu de la faible rigidité des matériaux alvéolaires et du caractère irrégulier de leurs réseaux d'évidements, la réalisation d'encoches uniquement dans les parties des parois séparant deux évidements voisins pose des problèmes délicats à résoudre dans la pratique.

Ainsi, si l'on usine les encoches au moyen de machines telles que des fraiseuses deux axes traditionnelles assurant le déplacement relatif de l'outil de coupe et de la planche de matériau alvéolaire suivant les deux axes du plan de cette planche, il n'est pas possible de garantir un positionnement précis des encoches dans les parois des évidements. En particulier, la déformation du matériau et les défauts présentés par le réseau d'évidements sont tels que certaines des encoches sont alors réalisées à des endroits non voulus de la structure tels que des noeuds séparant plusieurs évidements ou des parois usinées sur au moins une partie de leur longueur. Cela nuit gravement aux performances mécaniques du panneau sandwich réalisé avec le matériau ainsi usiné.

On ne connaît pas, à l'heure actuelle, de dispositif permettant d'usiner des encoches à la surface d'une telle structure en garantissant un positionnement suffisamment précis de ces encoches par rapport aux rangées d'évidements, pour éviter à coup sûr que certaines des encoches ne soient réalisées à des endroits non voulus susceptibles de nuire aux performances mécaniques du produit obtenu.

### Exposé de l'invention

De façon générale, l'invention a pour objet un procédé d'usinage en surface d'une structure présentant au moins une rangée d'évidements sensiblement alignés et régulièrement espacés débouchant sur ladite surface, selon une trajectoire parfaitement parallèle à la rangée d'évidements, quels que soient les défauts d'alignements présentés par ces évidements et quelles que soient les déformations subies par la structure lors de l'usinage.

Conformément à l'invention, ce résultat est obtenu au moyen d'un procédé d'usinage d'une structure présentant au moins une rangée d'évidements sensiblement alignés et régulièrement espacés, débouchant sur la surface à usiner, caractérisé en ce qu'on réalise l'usinage par un déplacement relatif entre une tête d'usinage portant des moyens de guidage et la structure à usiner, les dites moyens de guidage prenant appui successivement dans au moins certains des évidements de ladite rangée d'évidements, de façon à usiner la surface selon une trajectoire parallèle à ladite rangée.

Selon un mode de réalisation préféré de l'invention, on utilise une tête d'usinage comprenant au moins un organe rotatif muni sur sa périphérie de protubérances aptes à prendre appui successivement dans au moins certains des évidements lors dudit déplacement relatif.

Avantageusement, on applique alors l'organe rotatif contre la surface de la structure avec une force prédéterminée, sensiblement constante. Cette force est choisie selon la nature de la structure usinée, afin d'éviter sa déformation, en particulier par écrasement, tout en assurant une bonne pénétration des protubérances dans les évidements.

Selon le cas, on utilise soit un organe rotatif qui tourne librement sur lui-même lors dudit déplacement relatif, soit un organe rotatif moteur qui entraîne la tête d'usinage pour créer ce déplacement relatif.

Lorsque l'organe rotatif n'est pas moteur, on réalise un déplacement relatif global entre un porte-outil et la structure à usiner, selon une direction moyenne rectiligne proche de ladite trajectoire et on monte la tête d'usinage sur le porte-outil avec une laxité suffisante dans la direction sensiblement perpendiculaire à la trajectoire pour que cette tête suive la trajectoire précitée en prenant appui dans les évidements.

Avantageusement, on prend appui sur au moins deux rangées d'évidements situées de part et d'autre d'un outil de coupe porté par la tête d'usinage.

Une application privilégiée du procédé concerne l'usinage en surface d'une planche d'un matériau alvéolaire.

L'invention a aussi pour objet un dispositif d'usinage en surface d'une structure présentant au moins une rangée d'évidements sensiblement alignés et régulièrement espacés, débouchant sur la surface à usiner, caractérisé en ce qu'il comprend une tête d'usinage et des moyens de guidage portés par la tête d'usinage, aptes à prendre appui successivement dans au moins certains des évidements de ladite rangée d'évidement, lors d'un déplacement relatif entre la tête d'usinage et la structure à usiner, de façon à usiner la surface selon une trajectoire parallèle à ladite rangée d'évidements.

### Brève description des dessins

On décrira à présent, à titre d'exemple non limitatif, un mode de réalisation préféré de l'invention en se référant aux dessins annexés, dans lesquels :
- la figure 1 est une vue en perspective qui représente un mode de réalisation préféré d'un dispositif d'usinage conforme à l'invention ;
- la figure 2 est une vue en perspective qui représente plus en détail la tête d'usinage du dispositif de la figure 1 ; et
- la figure 3 est une vue en perspective illustrant notamment la coopération des protubérances équipant deux organes rotatifs portés par la tête d'usinage avec deux rangées d'évidements de la structure à usiner, dans le dispositif illustré sur les figures 1 et 2.

### Description détaillée d'un mode de réalisation préféré de l'invention

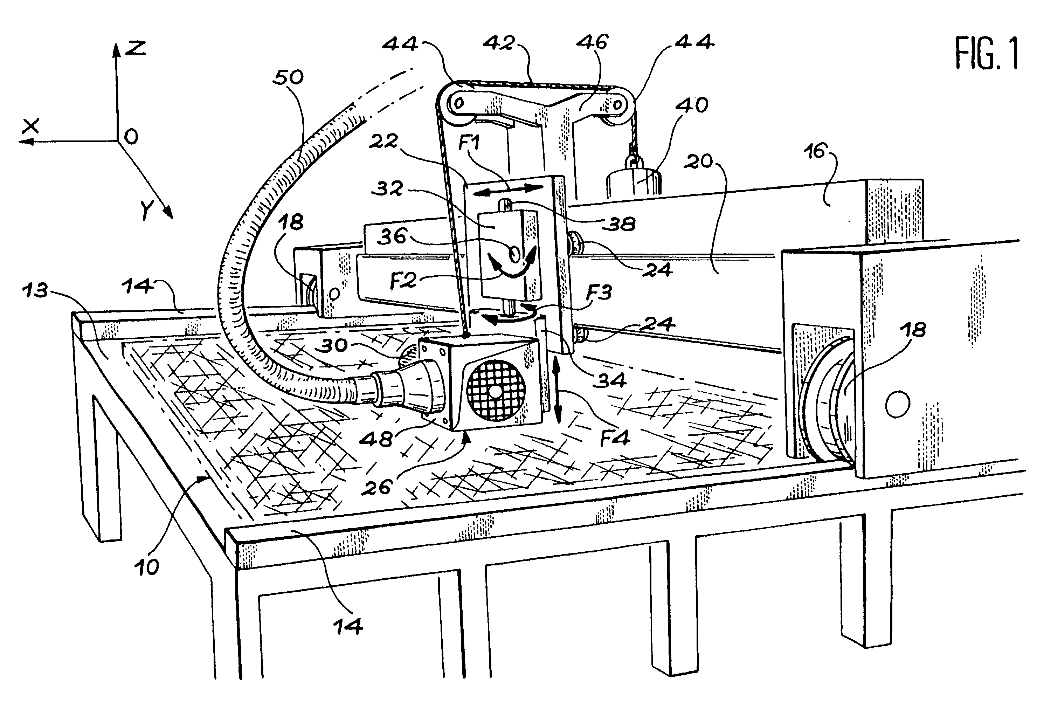

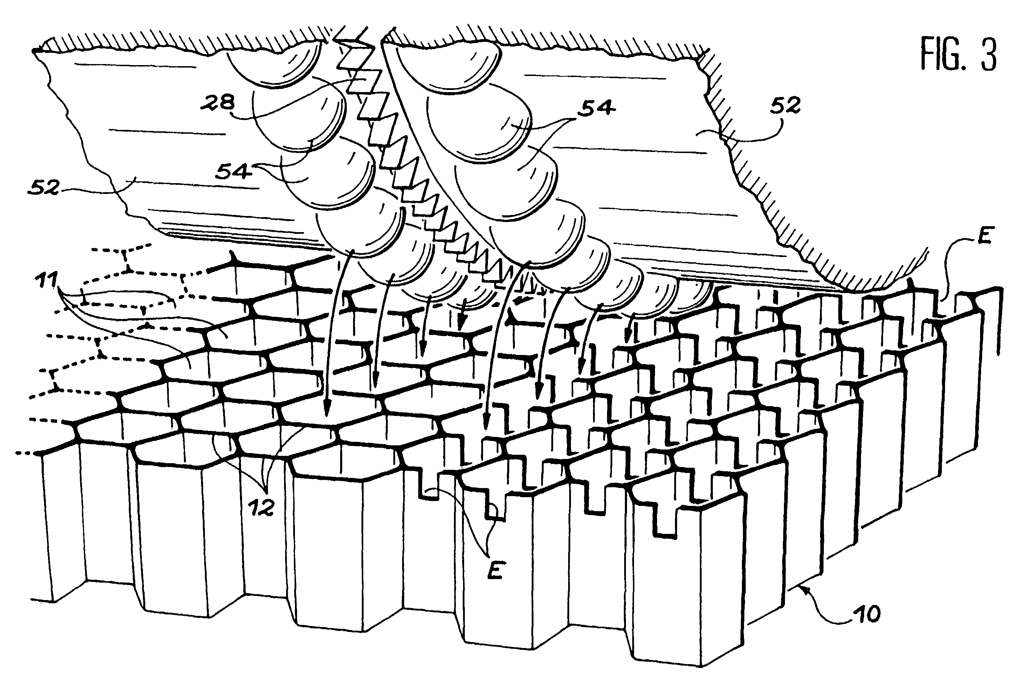

La figure 1 est une vue d'ensemble d'un dispositif d'usinage en surface conforme à l'invention. Dans le mode de réalisation représenté, ce dispositif est appliqué à l'usinage en surface d'une structure 10 se présentant sous la forme d'une planche plane d'un matériau alvéolaire en nids d'abeilles. Comme le montre mieux la figure 3, ce matériau présente, de façon connue, des alvéoles ou évidements 11 disposés en rangées parallèles selon un réseau hexagonal. Ces évidements sont séparés par des cloisons 12.

Il est à noter que l'invention n'est pas limitée à l'usinage de ce type de structure, mais s'applique de façon générale à l'usinage de toutes structures, planes ou non, présentant au moins une rangée d'évidements sensiblement alignés et régulièrement espacés, débouchant sur la surface à usiner. En particulier, tout type de structures alvéolaires à cellules tubulaires peut être usiné conformément à l'invention, à l'aide d'un dispositif dérivé de celui qui va à présent être décrit.

Dans le mode de réalisation illustré sur la figure 1, le dispositif d'usinage comprend une table fixe 13 prévue pour recevoir la structure 10 à usiner sur sa face supérieure. Le positionnement de la structure 10 sur la table 13 est assuré de façon que la surface à usiner de la structure 10 soit tournée vers le haut.

De part et d'autre de sa face supérieure sur laquelle repose la structure 10, la table 13 comporte deux rails 14 orientés parallèlement l'un à l'autre selon une première direction OX. Cette première direction est parallèle à la face supérieure de la table 13.

Une poutre ou portique 16 repose sur chacun des deux rails 14 par l'intermédiaire de galets de roulement 18. La poutre 16 est orientée parallèlement à la face supérieure de la table 13, selon une deuxième direction OY orthogonale à la première direction OX définie par les rails 14. Cet agencement permet à la poutre 16 de se déplacer le long des rails 14 selon la première direction OX, au-dessus de la structure 10 à usiner. Ce déplacement est avantageusement commandé par un organe moteur (non représenté) susceptible d'être piloté par un automate (non représenté).

Sur l'une de ses faces latérales, la poutre 16 est munie d'un rail 20 orienté selon la deuxième direction. Ce rail 20 supporte un porte-outil 22 par l'intermédiaire de galets 24. Cet agencement permet au porte-outil 22 de se déplacer d'un bout à l'autre de la poutre 16 et, par conséquent, sur toute la largeur de la table 13, selon la deuxième direction OY. Ce déplacement est schématisé par la flèche F1 sur la figure 1. Des moyens de commande (non représentés) sont avantageusement prévus pour commander un déplacement du porte-outil 22 d'une extrémité à l'autre de la poutre 16, sous l'action de l'automate (non représenté) cité plus haut.

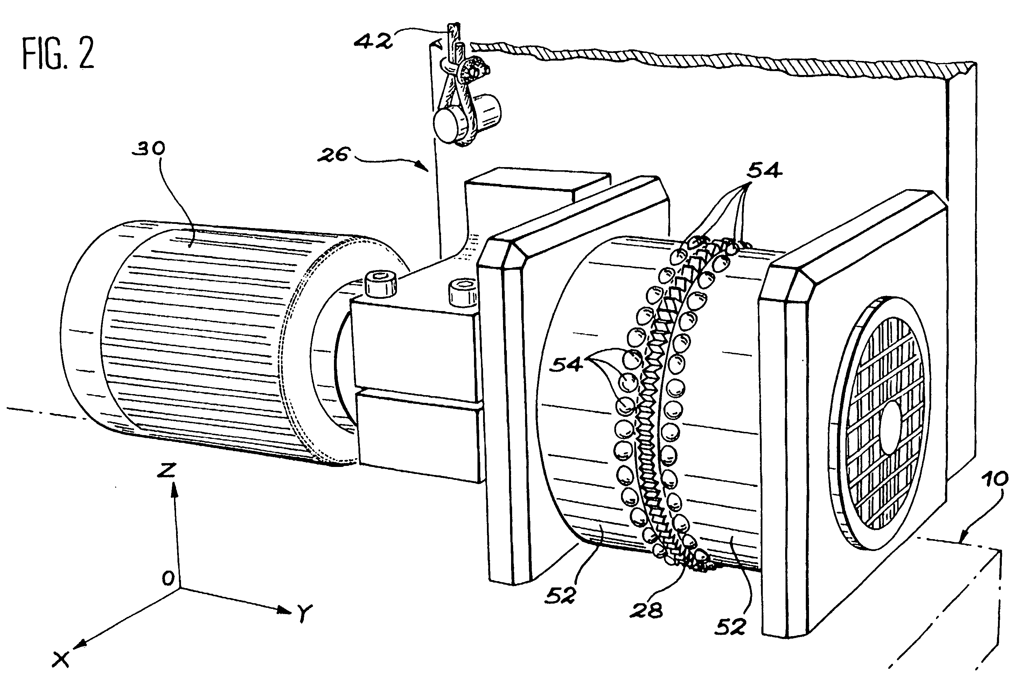

Le porte-outil 22 supporte une tête d'usinage 26 équipée d'un outil de coupe 28 (figure 2) dont le profil est adapté à la taille et à la forme des encoches, par exemple une scie circulaire à denture triangulaire. Cet outil de coupe 28 est entraîné en rotation par un moteur 30, autour d'un axe orienté sensiblement selon la deuxième direction OY.

Conformément à un premier aspect de l'invention, la tête d'usinage 26 est reliée au porte-outil 22 par l'intermédiaire d'un mécanisme autorisant un débattement limité entre ces deux sous-ensembles, au moins dans le sens latéral et en hauteur par rapport à la trajectoire suivie par le porte-outil 22, pendant l'opération d'usinage proprement dite. Ce mécanisme permet à la tête d'usinage 26 de suivre le déplacement du porte-outil 22 selon la première direction OX, tout en lui permettant de disposer d'une certaine liberté de mouvement à la fois selon la deuxième direction OY et selon une direction verticale OZ, orthogonale aux première et deuxième directions OX et OY.

Dans le mode de réalisation illustré à titre d'exemple sur la figure 1, cette liberté de mouvement relative entre la tête d'usinage 26 et le porte-outil 22 est obtenue en reliant ces deux organes par l'intermédiaire d'un mécanisme comprenant un premier support 32 et un deuxième support 34.

Plus précisément, le premier support 32 est monté sur le porte-outil 22 par l'intermédiaire d'un axe 36 orienté selon la première direction OX, c'est-à-dire parallèlement aux rails 14. Ainsi, le premier support 32 se déplace avec la poutre 16 et avec le porte-outil 22 selon la première direction OX, qui constitue aussi la direction d'avance de l'outil de coupe 28, tout en pouvant pivoter autour de l'axe 36, dans l'un et l'autre sens, comme l'illustre la flèche F2.

Le deuxième support 34 est relié au premier support 32 par un axe 38 orthogonal à l'axe 36 et sensiblement orienté selon l'axe vertical OZ. Plus précisément, cette liaison permet une rotation du deuxième support 34 autour de l'axe 38, illustrée par la flèche F3.

Enfin, la tête d'usinage 26 est montée sur le deuxième support 34 par un dispositif de guidage linéaire, qui autorise une translation de ladite tête par rapport au deuxième support 34, parallèlement à l'axe 38, tel qu'illustré par la flèche F4.

Des moyens de blocage (non représentés) permettent de bloquer les mouvements de pivotement autour des axes 36 et 38 dans une position neutre, dans laquelle ces axes sont respectivement orientés selon les directions OX et OY. Par ailleurs, un système de commande de levage (non illustré) permet de soulever la tête d'usinage 26 de la surface à usiner, lorsque le dispositif est à l'arrêt.

L'agencement qui vient d'être décrit est tel que la tête d'usinage 26 repose normalement par gravité sur la surface supérieure à usiner de la structure 10. Lorsque la poutre 16, portant la tête d'usinage 26, est déplacée le long des rails 14, afin d'assurer l'usinage d'encoches E (figure 3) dans les cloisons 12 de la structure 10, les variations de niveau de la surface supérieure de celle-ci sont automatiquement prises en compte par un déplacement de la tête d'usinage 26 par rapport au deuxième support 34 parallèlement à l'axe 38, selon la flèche F4. On est ainsi certain que la profondeur d'usinage reste constante quelle que soit la forme de la surface à usiner.

Par ailleurs, le pivotement du premier support 32 autour de l'axe 36 (flèche F2) combiné au pivotement du deuxième support 34 autour de l'axe 38 (flèche F3) permettent à l'outil de coupe 28 de suivre une trajectoire qui n'est pas parfaitement parallèle à la première direction OX définie par les rails 14.

Avantageusement, la tête d'usinage 26 est appliquée contre la surface à usiner de la structure 10 avec une force prédéterminée, sensiblement constante. Cette force est choisie en fonction de la nature de la structure à usiner, afin de ne pas l'endommager, tout en assurant une pression suffisante pour que la profondeur d'usinage souhaitée soit assurée en toutes circonstances.

Si la masse de la tête d'usinage 26 est insuffisante pour appliquer la force prédéterminée ainsi définie, la tête d'usinage peut être lestée. Des moyens élastiques peuvent aussi être interposés entre le porte-outil 22 et la tête d'usinage.

Dans le mode de réalisation représenté, on suppose que la masse de la tête d'usinage 26 conduirait à appliquer sur la structure 10 à usiner une force trop élevée. Dans ce cas, un contrepoids 40 peut être utilisé pour soulager l'effort du à la masse de la tête d'usinage 26, comme on l'a illustré sur la figure 1. Ce contrepoids 40 est alors relié à la tête d'usinage 26 34 par un câble 42 circulant sur des poulies 44 montées sur un mât 46 solidaire du porte-outil 22, de façon à appliquer sur la tête d'usinage une force orientée vers le haut.

Comme on l'a représenté sur la figure 1, la tête d'usinage 26 comporte de préférence un carénage 48 sur lequel est raccordée une tuyauterie 50 reliée à des moyens (non représentés) d'aspiration des copeaux produits par l'outil de coupe 28 lors de sa mise en oeuvre. Sur la figure 2, ce carénage a été retiré pour permettre de voir les parties de la tête d'usinage proches de l'outil de coupe 28, qui vont à présent être décrites.

Conformément à l'invention, la tête d'usinage 26 comporte, au moins d'un côté de l'outil de coupe 28 et, de préférence, de part et d'autre de celui-ci comme on l'a représenté sur la figure 2, un organe rotatif 52.

Dans le mode de réalisation représenté, chacun des organes rotatifs 52 est constitué par une roue de guidage qui affleure la face correspondante de la fraise formant l'outil de coupe 28. Les roues de guidage 52 sont montées dans la tête d'usinage 26 de façon à tourner librement autour d'un même axe. Cet axe est parallèle à l'axe de l'outil 28 ou confondu avec celui-ci, comme dans le cas des figures 2 et 3. En revanche, tout autre déplacement relatif significatif entre les roues 52 et l'outil 28 est impossible. Cela signifie notamment que l'outil 28 et les roues de guidage 52 se déplacent à l'unisson lorsque la tête d'usinage 26 se déplace par rapport au porte-outil 22, en profitant de la liberté de mouvement procurée par le mécanisme de liaison interposé entre ces organes.

L'agencement relatif entre les roues de guidage 52 et l'outil de coupe 28 est tel que la génératrice inférieure des roues 52 soit située au-dessus de la génératrice inférieure de l'outil 28, à une distance égale à la profondeur des encoches E (figure 3) à usiner. Ainsi, lorsque la tête d'usinage 26 repose sur la structure 10 à usiner, les roues de guidage prennent appui sur la surface supérieure de celle-ci. L'outil de coupe 28 s'enfonce alors dans les cloisons 12 sur une hauteur correspondant à la profondeur des encoches E.

Comme on le voit sur les figures 2 et 3, à proximité immédiate de l'outil de coupe 28, chacune des roues 52 est munie sur sa périphérie de protubérances 54 régulièrement espacées. Les dimensions, la forme et l'espacement des protubérances 54 sont choisis en fonction de la structure 10 à usiner, afin que chacune des protubérances soit apte à pénétrer dans l'extrémité de l'un des évidements 11 formés dans la structure 10.

Lors de l'usinage des encoches E dans les cloisons 12 séparant les évidements d'une rangée d'évidements 11 formée dans la structure 10, selon une direction sensiblement parallèle à la première direction OX, la poutre 16 se déplace sur les rails 14, selon la direction OX. La poutre 16 entraîne avec elle la tête d'usinage 26, par l'intermédiaire du porte-outil 22 et du mécanisme de liaison avec jeu reliant ces deux organes. Les protubérances 54 des roues de guidage 52 prennent alors appui successivement dans les évidements 11 de deux rangées d'évidements attenantes à la rangée d'évidements dont les cloisons de séparation 12 sont en cours d'usinage.

Du fait de la coopération des protubérances 54 avec les évidements 11, la trajectoire instantanée suivie par l'outil de coupe 28 correspond précisément à celle de la rangée d'évidements dont on usine les cloisons de séparation. On réalise ainsi un positionnement latéral et en hauteur très précis de l'outil, du fait que la tête d'usinage 26 dispose de certains degrés de liberté par rapport au porte-outil 22, comme on l'a décrit précédemment. Par conséquent, quels que soient les défauts de la structure à usiner et les déformations éventuelles subies par celle-ci lors de l'usinage, le procédé et le dispositif selon l'invention permettent d'être certain que les encoches E soient usinées précisément aux endroits souhaités et présentent bien la profondeur désirée. Ainsi, toutes les encoches peuvent notamment être pratiquées au centre des cloisons 12 séparant les évidements consécutifs d'une même rangée, comme l'illustre la figure 3. Les performances mécaniques de la pièce finale sont ainsi pratiquement garanties.

Le changement de passe d'usinage s'effectue en bloquant les déplacements du porte-outil 22 selon la direction latérale OY par rapport à la direction d'avance OX de l'outil 28. A la fin de chaque passe, lorsque la tête d'usinage 26 repose encore sur la surface de la structure 10 à usiner, le degré de liberté latéral OY de la tête d'usinage est verrouillé. La tête d'usinage est ensuite soulevée suffisamment pour dégager totalement les protubérances 54 et l'outil de coupe 28 de la structure 10 à usiner. On effectue alors un déplacement latéral du porte-outil 22, selon la direction OY, sur une distance correspondant à un nombre entier de pas séparant les rangées d'évidements 11 juxtaposées dans cette direction. Ce déplacement est généralement de un pas lorsque toutes les rangées d'alvéoles doivent être usinées et qu'un seul outil de coupe 28 est utilisé. La tête d'usinage 26 est ensuite reposée sur la surface de la structure, le degré de liberté dans le sens latéral OY est libéré et une nouvelle passe d'usinage dans le sens longitudinal (en sens inverse) OX est mise en oeuvre.

Bien entendu, toutes ces opérations peuvent être traitées par un automate, notamment lorsque toute une surface de la structure 10 doit être usinée.

Le mode de réalisation qui vient d'être décrit en se référant aux figures 1 à 3 peut subir de nombreuses variantes, sans sortir du cadre de l'invention. Ainsi, le guidage de l'outil de coupe peut être assuré par un seul organe rotatif au lieu de deux. Par ailleurs, les protubérances équipant chaque organe rotatif peuvent être agencées de façon à ne pénétrer que dans un évidement sur deux d'une même rangée, lorsque les évidements sont très rapprochés. En outre, au lieu d'être constitué par une roue, chaque organe rotatif peut aussi être constitué, par exemple, par un système à chenilles portant les protubérances.

Par ailleurs, au lieu d'être montée sur une poutre guidée par des rails, la tête d'usinage peut être portée par un bras articulé ou par tout système équivalent. La tête d'usinage peut également être montée sur un système portable, manipulé directement par un opérateur dont le guidage manuel assure alors les déplacements latéraux et en hauteur imposés par la coopération des protubérances et des évidements. Dans ce cas, il est également possible de remplacer le ou les organe(s) rotatif(s) à rotation libre par un ou plusieurs organes rotatifs moteurs, qui servent alors à commander l'avance du dispositif.

Enfin, la technique d'usinage conforme à l'invention s'applique aussi bien à l'usinage d'une structure plane qu'à l'usinage d'une structure présentant une surface convexe ou concave. Si les évidements sont généralement formés par les alvéoles d'un matériau alvéolaire à cellules tubulaires, il peut aussi s'agir d'évidements de nature différente, qui ne traversent pas nécessairement toute la structure.

Il est à noter par ailleurs que la forme et la profondeur de l'encoche usinée à l'aide du dispositif selon l'invention peuvent être quelconques et dépendent uniquement de l'outil de coupe choisi. Ainsi, au lieu de se présenter sous la forme d'une scie circulaire dont l'axe est confondu ou parallèle à celui de l'organe rotatif portant les protubérances, comme dans le mode de réalisation décrit, l'outil de coupe peut être constitué par un forêt, ou analogue, dont l'axe de rotation est alors orthogonal à celui de l'organe rotatif et orienté perpendiculairement à la surface de la structure à usiner. Il est aussi possible d'usiner simultanément plusieurs encoches en ayant recours à plusieurs outils d'usinage juxtaposés.

## Revendications

1. Procédé d'usinage d'une structure (10) présentant au moins une rangée d'évidements (11) sensiblement alignés et régulièrement espacés, débouchant sur la surface à usiner, **caractérisé en ce qu'**on réalise l'usinage par un déplacement relatif entre une tête d'usinage (26) portant des moyens de guidage et la structure (10) à usiner, les dites moyens de guidage prenant appui successivement dans au moins certains des évidements (11) de ladite rangée d'évidements, de façon à usiner la surface selon une trajectoire parallèle à ladite rangée.

2. Procédé selon la revendication 1, dans lequel on utilise une tête d'usinage (26) comprenant au moins un organe rotatif (52) muni sur sa périphérie de protubérances (54) aptes à prendre appui successivement dans au moins certains des évidements (11) lors dudit déplacement relatif.

3. Procédé selon la revendication 2, dans lequel on applique ledit organe rotatif (52) contre la surface de la structure (10) avec une force prédéterminée, sensiblement constante.

4. Procédé selon l'une quelconque des revendications 2 et 3, dans lequel on utilise un organe rotatif (52) qui tourne librement sur lui-même lors dudit déplacement relatif.

5. Procédé selon l'une quelconque des revendications 2 et 3, dans lequel on utilise un organe rotatif (52) moteur qui entraîne la tête d'usinage (26) pour créer ledit déplacement relatif.

6. Procédé selon l'une quelconque des revendications 1 à 4, dans lequel on réalise un déplacement relatif global entre un porte-outil (22) et la structure (10) à usiner, selon une direction moyenne rectiligne (OX) proche de ladite trajectoire et on monte la tête d'usinage (26) sur le porte-outil (22) avec une laxité suffisante dans une direction sensiblement perpendiculaire à la trajectoire pour que cette tête suive ladite trajectoire en prenant appui dans les évidements (11).

7. Procédé selon l'une quelconque des revendications précédentes, dans lequel on prend appui sur au moins deux rangées d'évidements (11) situées de part et d'autre d'un outil de coupe (28) porté par la tête d'usinage (26).

8. Procédé selon l'une quelconque des revendications précédentes, appliqué à l'usinage en surface d'une planche d'un matériau alvéolaire (10).

9. Dispositif d'usinage en surface d'une structure (10) présentant au moins une rangée d'évidements (11) sensiblement alignés et régulièrement espacés, débouchant sur la surface à usiner, **caractérisé en ce qu'**il comprend une tête d'usinage (26) et des moyens de guidage (52) portés par la tête d'usinage (26), aptes à prendre appui successivement dans au moins certains des évidements (11) de ladite rangée d'évidement, lors d'un déplacement relatif entre la tête d'usinage (26) et la structure (10) à usiner, de façon à usiner la surface selon une trajectoire parallèle à ladite rangée d'évidements.

10. Dispositif selon la revendication 9, dans lequel les moyens de guidage comprennent au moins un organe rotatif (52) muni sur sa périphérie de protubérances (54) aptes à prendre appui successivement dans au moins certains des évidements (11), lors dudit déplacement relatif.

11. Dispositif selon la revendication 10, dans lequel on prévoit des moyens (40) pour appliquer l'organe rotatif (52) contre la surface à usiner, avec une force prédéterminée, sensiblement constante.

12. Dispositif selon la revendication 11, dans lequel lesdits moyens d'application comprennent un contrepoids (40).

13. Dispositif selon l'une quelconque des revendications 10 à 12, dans lequel l'organe rotatif (52) est monté dans le porte-outil (22) de façon à pouvoir tourner librement sur lui-même.

14. Dispositif selon l'une quelconque des revendications 10 à 12, dans lequel l'organe rotatif (52) est apte à être entraîné en rotation par des moyens moteurs.

15. Dispositif selon l'une quelconque des revendications 9 à 13, comprenant de plus un porte-outil (22), des moyens (14,18,20) pour déplacer le porte-outil selon une direction moyenne rectiligne (OX) proche de ladite trajectoire, et un mécanisme de liaison avec jeu (32,34,36,38) par lequel la tête d'usinage (26) est montée sur le porte-outil (22).

16. Dispositif selon l'une quelconque des revendications 10 à 15, dans lequel lesdits moyens de guidage (52) sont aptes à prendre appui sur au moins deux rangées d'évidements (11) situées de part et d'autre d'un outil de coupe (28) porté par la tête d'usinage (26).

## Patentansprüche

1. Verfahren zur Bearbeitung einer Struktur (10), die wenigstens eine Reihe mit im Wesentlich geradlinig angeordneten und gleichmäßig voneinander beabstandeten Hohlräumen (11) aufweist, die in die zu bearbeitende Oberfläche münden,
**dadurch gekennzeichnet, dass** die Bearbeitung durch eine relative Verschiebung zwischen einem Führungsmittel tragenden Bearbeitungskopf (26) und der zu bearbeitenden Struktur (10) ausgeführt wird, wobei die Führungsmittel nacheinander in wenigstens einigen der Hohlräume (11) der Hohlraumreihe zur Anlage kommen, derart, dass die Oberfläche in einer parallel zu dieser Reihe verlaufenden Bahn bearbeitet wird.

2. Verfahren nach Anspruch 1,
bei dem ein Bearbeitungskopf (26) verwendet wird, der wenigstens einen Drehkörper (52) umfasst, der an seiner Außenseite mit Vorwölbungen (54) versehen ist, die geeignet sind, während der relativen Verschiebung nacheinander in wenigstens einigen der Hohlräume (11) zur Anlage zu kommen.

3. Verfahren nach Anspruch 2,
bei dem der Drehkörper (52) mit einer vorbestimmten, im Wesentlichen konstanten Kraft gegen die Oberfläche der Struktur (10) gedrückt wird.

4. Verfahren nach einem der Ansprüche 2 oder 3,
bei dem ein Drehkörper (52) verwendet wird, der während dieser relativen Verschiebung frei um sich selbst drehbar ist.

5. Verfahren nach einem der Ansprüche 2 oder 3,
bei dem ein Antriebsdrehorgan (52) verwendet wird, das den Bearbeitungskopf (26) antreibt, um diese relative Verschiebung zu bewirken.

6. Verfahren nach einem der Ansprüche 1 bis 4,
bei dem eine allgemeine relative Verschiebung zwischen einem Werkzeughalter (22) und der zu bearbeitenden Struktur (10) in einer durchschnittlich geradlinigen Richtung (OX) in der Nähe der Bahn ausgeführt wird, und der Bearbeitungskopf (26) auf dem Werkzeughalter (22) in einer zur Bahn im Wesentlichen lotrechten Richtung locker genug angebracht ist, damit der Kopf dieser Bahn folgt und hierbei in den Hohlräumen (11) zur Anlage kommt.

7. Verfahren nach einem der vorhergehenden Ansprüche,
bei dem die Anlage wenigstens an zwei Reihen von Hohlräumen (11) erfolgt, die zu beiden Seiten eines von dem Bearbeitungskopf (26) getragenen Schneidwerkzeugs (28) angeordnet sind.

8. Verfahren nach einem der vorhergehenden Ansprüche,
das sich zur Oberflächenbearbeitung einer Platte aus einem zellen- oder wabenförmigen Material (10) eignet.

9. Vorrichtung zur Oberflächenbearbeitung einer Struktur (10), die wenigstens eine Reihe mit im Wesentlich geradlinig angeordneten und gleichmäßig voneinander beabstandeten Hohlräumen (11) aufweist, die in die zu bearbeitende Oberfläche münden,
**dadurch gekennzeichnet, dass** sie einen Bearbeitungskopf (26) und von dem Bearbeitungskopf (26) getragene Führungsmittel (52) umfasst, die geeignet sind, während einer relativen Verschiebung zwischen dem Bearbeitungskopf (26) und der zu bearbeitenden Struktur (10) nacheinander in wenigstens einigen der Hohlräume (11) dieser Hohlraumreihe zur Anlage zu kommen, derart, dass die Oberfläche in einer parallel zu dieser Hohlraumreihe verlaufenden Bahn bearbeitet wird.

10. Vorrichtung nach Anspruch 9,
bei der die Führungsmittel wenigstens einen Drehkörper (52) umfassen, der an seiner Außenseite mit Vorwölbungen (54) versehen ist, die geeignet sind, während der relativen Verschiebung nacheinander in wenigstens einigen der Hohlräume (11) zur Anlage zu kommen.

11. Vorrichtung nach Anspruch 10,
bei der Mittel (40) vorgesehen sind, um den Drehkörper (52) mit einer vorbestimmten, im Wesentlichen konstanten Kraft gegen die zu bearbeitende Oberfläche zu drücken.

12. Vorrichtung nach Anspruch 11,
bei der die Druckmittel ein Gegengewicht (40) umfassen.

13. Vorrichtung nach einem der Ansprüche 10 bis 12,
bei der der Drehkörper (52) in dem Werkzeughalter (22) derart angebracht ist, dass er frei um sich selbst drehbar ist.

14. Vorrichtung nach einem der Ansprüche 10 bis 12,
bei der der Drehkörper (52) durch Antriebsmittel zur Rotation angetrieben zu werden vermag.

15. Vorrichtung nach einem der Ansprüche 9 bis 13, die femer einen Werkzeughalter (22), Mittel (14, 18, 20) zum Verschieben des Werkzeughalters in einer durchschnittlich geradlinigen Richtung (OX) in der Nähe der Bahn und einen Verbindungsmechanismus mit Spiel (32, 34, 36, 38) umfasst, mit dem der Bearbeitungskopf (26) auf dem Werkzeughalter (22) angebracht wird.

16. Vorrichtung nach einem der Ansprüche 10 bis 15,
bei der die Führungsmittel (52) geeignet sind, wenigstens an zwei Reihen von Hohlräumen (11) zur Anlage zu kommen, die zu beiden Seiten eines von dem Bearbeitungskopf (26) getragenen Schneidwerkzeugs (28) angeordnet sind.

## Claims

1. Method for machining a structure (10) having at least one row of substantially aligned and regularly spaced recesses (11) issuing onto the surface to be machined, **characterized in that** machining takes place by a relative displacement between a machining head (26) carrying guidance means and the structure (10) to be machined, said guidance means being successively supported in at least some of the recesses of said row of recesses (11), so as to machine the surface in accordance with a trajectory parallel to said row.

2. Method according to claim 1, wherein use is made of a machining head (26) having at least one rotary member (52) provided on its periphery with protuberances (54) able to successively bear in at least some of the recesses (11) during said relative displacement.

3. Method according to claim 2, wherein said rotary member (520 is applied to the surface of the structure (10) with a substantially constant and predetermined force.

4. Method according to claim 2 or 3, wherein use is made of a rotary member (52), which rotates freely on itself during said relative displacement.

5. Method according to claim 2 or 3, wherein use is made of a motor-driven rotary member (52), which drives the machining head (26) in order to create said relative displacement.

6. Method according to any one of the claims 1 to 4, wherein there is an overall relative displacement between a tool holder (22) and the structure (10) to be machined, in accordance with a rectilinear, mean direction close to the said trajectory and the machining head (26) is mounted on the tool holder (22) with an adequate slackness in a direction substantially perpendicular to the trajectory to ensure that said head follows said trajectory being supported in the recesses (11).

7. Method according to any one of the preceding claims, wherein bearing takes place on at least two rows of recesses (11) located on either side of a cutting tool (28) carried by the machining head (26).

8. Method according to any one of the preceding claims, applied to the surface machining of a cellular material plate (10).

9. Device for the surface machining of a structure (10) having at least one row of substantially aligned and regularly spaced recesses (11) issuing onto the surface to be machined, **characterized in that** it comprises a machining head (26) and guidance means (52) carried by the machining head (26) and which can be successively supported in at least some of the recesses of said row of recesses (11), during a relative displacement between the machining head (26) and the structure (10) to be machined, so as to machine the surface in accordance with a trajectory parallel to said row of recesses.

10. Device according to claim 9, wherein the guidance means comprise at least one rotary member (52) peripherally provided with protuberances (54) able to successively bear in at least some of the recesses during said relative displacement.

11. Device according to claim 10, wherein means (40) are provided for applying the rotary member (52) to the surface to be machined with a substantially constant and predetermined force.

12. Device according to claim 11, wherein said application means comprise a counterweight (40).

13. Device according to any one of the claims 10 to 12, wherein the rotary member (52) is mounted in the tool holder (22) so as to be able to rotate freely on itself.

14. Device according to any one of the claims 10 to 12, wherein the rotary member (52) can be rotated by motor-driven means.

15. Device according to any one of the claims 9 to 13, also comprising a tool holder (22), means (14, 18, 20) for displacing the tool holder in a rectilinear, mean direction (OX) close to said trajectory and a linking mechanism (32, 34, 36, 38) with clearance by which the machining head (26) is mounted on the tool holder (22).

16. Device according to any one of the claims 10 to 15, wherein said guidance means (52) can bear on at least two rows of recesses (11) located on either side of a cutting tool carried by the machining head (26).
